# EUROPÄISCHE PATENTSCHRIFT

(11) **EP 2 525 958 B1**
(45) Veröffentlichungstag und Bekanntmachung des Hinweises auf die Patenterteilung: **10.01.2018**
(21) Anmeldenummer: 11704737.3
(22) Anmeldetag: 19.01.2011
(51) Int. Cl.: B29C 47/02, B29C 47/90, B29C 65/00, B29C 71/04, B29C 47/06, B29C 63/02

(54) **VERFAHREN UND VORRICHTUNG ZUR HERSTELLUNG EINES VERBUNDPROFILS**
METHOD AND DEVICE FOR PRODUCING A COMPOSITE PROFILE
PROCÉDÉ ET DISPOSITIF DE FABRICATION D'UN PROFILÉ COMPOSITE

(30) Priorität: 20.01.2010 DE 102010001049
(43) Veröffentlichungstag der Anmeldung: 28.11.2012
(73) Patentinhaber: Greiner Tool.Tec GmbH, 4542 Nussbach (AT)
(72) Erfinder: KRUMBÖCK, Erwin, 4052 Ansfelden (AT); HUBL, Bernhard, 4542 Nussbach (AT); FISCHER, Bernhard, 4554 Wartber (AT); GEBESMAIR, Karl, 4560 Kirchdorf/Krems (AT); ANDERS, Gerhard, 4551 Ried (AT)
(74) Vertreter: Maikowski & Ninnemann Patentanwälte Partnerschaft mbB
(86) Internationale Anmeldenummer: PCT/EP2011/050697
(87) Internationale Veröffentlichungsnummer: WO 2011/089159

(56) Entgegenhaltungen:
- EP-A1- 0 846 543
- WO-A1-01/66266
- WO-A1-90/08639
- GB-A- 2 094 708
- US-A1- 2004 062 915
- DATABASE WPI Week 198737 Thomson Scientific, London, GB; AN 1987-261374 XP002649699, -& JP 62 182136 A (NIPPON TELEGRAPH & TELEPHONE CORP) 10. August 1987 (1987-08-10)

## Beschreibung

Die Erfindung betrifft ein Verfahren zur Herstellung eines Verbundprofils nach Anspruch 1 und eine Vorrichtung zur Herstellung eines Verbundprofils nach Anspruch 7.

Es ist bekannt, dass die Herstellung eines Verbundprofils aus mindestens zwei thermoplastischen Kunststoffkomponenten in einem fortlaufenden Arbeitsgang mittels Koextrusion erfolgen kann. Hierzu ist es üblich, dass zunächst ein erstes Profil in einem ersten Extrusionsvorgang aus einer Düse extrudiert und in einer anschließenden Kalibriereinrichtung bis zum Erreichen eines formstabilen Zustandes abgekühlt wird. Anschließend wird in einem weiteren Extrusionsvorgang ein zweites Profil auf das erste Profil ein- bzw. aufextrudiert. Die Haftung zwischen den Profilen wird durch Wechselwirkung zwischen den beiden Komponenten mittels Physisorption bzw. Chemisorption erreicht.

Aus der EP 0 455 670 A1 ist bekannt die Kontaktfläche eines bis zum Erreichen eines formstabilen Zustandes abgekühltem Profils wieder zu erhitzen, so dass die Kontaktfläche des Profils erweicht wird.

Die bekannten Verfahren und Vorrichtungen haben den Nachteil, dass sie hinsichtlich der Materialwahl eingeschränkt sind.

Aus der EP 0 846 543 A1 ist ein Verfahren zur Herstellung eines Kunststoffprofils aus extrudierbaren Kunststoffen gemäß dem Oberbegriff des Anspruchs 1 bekannt.

Weitere Verfahren und Vorrichtungen zur Herstellung von Kunststoffprofilen aus extrudierbaren Kunststoffen sind in den Dokumenten WO 90/08639 A1 und WO 01/66266 A1 beschrieben.

Der Erfindung liegt die Aufgabe zu Grunde, die Haftfähigkeit zwischen verschiedenen Kunststoffkomponenten bei einem Verfahren oder einer Vorrichtung der eingangs genannten Art zu verbessern.

Diese Aufgabe wird erfindungsgemäß durch ein Verfahren mit den Merkmalen des Anspruchs 1 und durch eine Vorrichtung mit den Merkmalen des Anspruchs 7 gelöst. Vorteilhafte und bevorzugte Ausgestaltungen der Erfindung sind in den Unteransprüchen angegeben.

Die Lösung zeichnet sich dadurch aus, dass ein erstes Profil (d.h. ein Kunststoffextrusionsprofil), welches in einer Kalibriereinrichtung bis zum Erreichen eines formstabilen Zustands abgekühlt wurde, in einer Vorbehandlungszone, insbesondere mittels einer Vorbehandlungsvorrichtung, bearbeitet wird. Die Vorbehandlungszone liegt in Extrusionsrichtung vor einer Aufextrusionszone. In der Aufextrusionszone wird in einem weiteren Extrusionsvorgang, insbesondere mittels einer Aufextrusionsvorrichtung mindestens ein zweites Profil aufextrudiert. Die Bearbeitung erfolgt durch ein mechanisches Fertigungsverfahren und führt im Endergebnis zu einer Verbesserung der Haftfähigkeit zwischen den einzelnen Kunststoffkomponenten.

Die Vorbehandlung erfolgt somit explizit nach der Kalibrierung. Das erste Profil ist an dieser Stelle weitgehend abgekühlt. Die Vorbehandlung erfolgt bevorzugt sehr nahe (zeit- und wegmäßig), bevor das zweite Profil aufextrudiert wird.

Auch kann eine Verbesserung der Verbindung zwischen dem ersten Profil und dem zweiten Profil durch die Vorbehandlung erreicht werden, je nach den Materialeigenschaften der verwendeten Komponenten.

An der Vorbehandlungsvorrichtung ist mindestens ein Formwerkzeug zur Aufbringung einer Profilierung auf und/oder in dem ersten Profil in der Vorbehandlungszone angeordnet. Die Profilierung des ersten Profils wird durch mindestens ein Formwerkzeug, z.B. auslaufseitig angeordnet, mittels eines mechanischen Trennverfahrens erzeugt. Dies kann durch Schleifen und Aufrauen der Kontaktfläche geschehen oder auch durch messerförmiges Schneiden, welche Rillen und/oder Aufwerfungen erzeugen und / oder durch einen auslaufseitig befestigten Kamm. Alternativ oder zusätzlich können noch weitere mechanische Trennverfahren wie beispielsweise Fräsen, Raspeln und Kerben eingesetzt werden.

Alternativ oder zusätzlich kann die Profilierung des ersten Profils auch durch eine auslaufseitig befestigte Walze mit einem gewünschten Profilierungsmuster, welches in das erste Profil gedrückt wird. Alternativ oder zusätzlich können noch weitere Umformungsverfahren für die Vorbehandlung, wie beispielsweise Rändeln, Stempeln oder Prägen verwendet werden.

Vorteilhaft ist es, wenn die Vorbehandlung eine Veränderung der Oberfläche des ersten Profils bis zu einer mittleren Tiefe von 0,5 mm bewirkt. Damit wird die Oberfläche im Mikrobereich vorbehandelt. Dies ist im Unterschied zu dem Aufbringen von Noppen oder dem Einbringen von Nuten zu sehen.

Die Formwerkzeuge in der Vorbehandlungszone sind mit Vorteil justierbar gelagert, um die Eindringtiefe und Art der Profilierung auf dem ersten Profil zu steuern. Weiterhin ist es von Vorteil die Formwerkzeuge zu beschichten. Hierbei ist zu beachten, dass der Abstand der Aufextrusionsvorrichtung vom ersten Profil in Richtung der Auslaufseite hin zunimmt, um die entstandenen Aufwerfungen der Profilierung nicht zu zerstören. Dabei ist es sinnvoll, wenn nach dem Profilieren der Kontaktfläche die entstandenen Aufwerfungen und Einkerbungen nicht wieder eingeebnet werden. Das kann z.B. durch einen geeigneten Abstand zwischen Profil und Düse bewirkt werden.

Das Formwerkzeug wird oberhalb der Erweichungstemperatur des Materials des ersten Profils temperiert und die Vorbehandlungszone wird vorgewärmt (z.B. durch Infrarot oder Laserstrahlung), wodurch das erste Profil in der Vorbehandlungszone erhitzt wird. Damit kann z.B. eine bessere Verbindungsfestigkeit durch die Kombination einer Vorwärmung der Oberfläche des ersten Profils mit einem mechanischen Fertigungsverfahren erreicht werden. Die Vorwärmung erfolgt vorteilhafterweise in der Vorbehandlungsvorrichtung noch vor einer Profilierung durch ein Formwerkzeug. Diese Abfolge ist nicht zwingend und kann, je nach Bedarf, angepasst werden. Ein Erhitzen dieses Bereichs, vorzugsweise in einem Temperaturrahmen von 100°C bis 250°C, kann beispielsweise durch eine Heizfläche und Kontakt über Wärmeleitung, über Heißluftwärme oder eine Strahlungsquelle erfolgen. Die Wärme wird über eine Fläche auf das erste Profil übertragen und kann in seiner Breite dem aufextrudierten zweiten Profil entsprechen. Diese Zuordnung ist allerdings nicht zwingend. Die Breite der auf jeglicher Art vorbehandelten Fläche des ersten Profils kann ebenso größer oder kleiner der Breite des zweiten Profils sein.

Ebenfalls ist es vorteilhaft, wenn auf das erste Profil in der Vorbehandlungszone mindestens ein Haftvermittler mit oder ohne mindestens einen Zusatzstoff aufgebracht wird. Gerade bei Kunststoffkomponenten mit deutlich unterschiedlichen physikalischen und chemischen Eigenschaften ist dieses Verfahren von Vorteil.

Eine weitere Verbesserung der Verbindungsfestigkeit kann durch Auftragen eines Haftvermittlers mit inerten Zusatzstoffen erreicht werden. Dem Haftvermittler werden, je nach Bedarf, in unterschiedlicher Körnigkeit Kunststoffkomponenten zugefügt. Die physikalischen und chemischen Eigenschaften dieser Zusatzstoffe werden an die Erfordernisse der zu verbindenden Profile angepasst. Dadurch wird eine erhöhte Wechselwirkung zwischen den einzelnen Komponenten erreicht. Weiterhin wird die Haftfestigkeit durch die größere Oberfläche und zusätzlich aufgebrachte Profilierung positiv beeinflusst.

Zusätzlich kann der Umgebungsdruck in der Vorbehandlungszone verringet werden. Das Verfahren erfolgt vorteilhafterweise analog zur Druckerniedrigung des Umgebungsdrucks in der Aufextrusionszone. Eine Druckerniedrigung in der Vorbehandlungszone ermöglicht beispielsweise ein Entfernen vorher aufgebrachter leichtflüchtiger Substanzen.

Zusätzlich kann die Aufextrusion des zweiten Profils auf das erste Profil unter Erniedrigung des Umgebungsdrucks vor und/oder innerhalb der Aufextrusionszone erfolgen. Der Umgebungsdruck in der Aufextrusionszone wird vorteilhafterweise in mindestens einer Hohlkammer, welche durch den unmittelbaren Kontakt des ersten Profils mit der Aufextrusionsvorrichtung einlaufseitig und seitlich abgedichtet wird und sich auslaufseitig bis zum Düsenausgang erstreckt, verringert. Die Druckerniedrigung erfolgt mit Vorteil mittels einer entsprechenden Pumpvorrichtung, die beispielsweise über Bohrungen oder Schlitze mit dem Hohlkörper verbunden ist. Eine Druckerniedrigung verringert die Gefahr von Lufteinschlüssen zwischen den beiden Kunststoffkomponenten, welche die Haftfestigkeit negativ beeinflusst. Gerade bei einer Profilierung der Oberfläche des ersten Profils ist diese Gefahr deutlicher ausgeprägt. Somit wird durch das Anlegen eines Unterdrucks die Haftfestigkeit der einzelnen Komponenten erhöht.

Die Beaufschlagung mit Unterdruck bewirkt, dass keine Luftblasen in der Kontaktfläche zwischen den beiden Profilen eingebettet werden. Luftblasen können das Anhaften des zweiten Profils stören. Der Bereich unmittelbar vor dem Aufbringen des zweiten Profils wird druckmäßig evakuiert. Außerdem kann eine Evakuierung das "Ansaugen" des zweiten Profils auf die vorbehandelte Oberfläche fördern.

Alternativ oder zusätzlich kann auch eine Erhöhung des Umgebungsdrucks nach der Aufextrusionszone vorteilhaft sein. Die Erhöhung erfolgt insbesondere mittels einer Druckkammer oder Druckluft. Durch eine Druckerhöhung werden Verteilung und Kontakt des zweiten Profils mit dem ersten Profils maximiert.

Die Verbindungsfestigkeit einzelner Kunststoffkomponenten kann vorteilhafterweise durch eine gezielte Veränderung des Umgebungsdruckes während oder nach der Auftragung des zweiten Profils erhöht werden.

Die Aufgabe wird auch durch eine Vorrichtung mit den Merkmalen des Anspruchs 7 gelöst. Dabei dient mindestens eine Vorbehandlungsvorrichtung zur Bearbeitung des ersten Profils durch eine mechanische Vorbehandlung in der Vorbehandlungszone. Vorteilhaft ist es dabei, wenn die Vorbehandlungsvorrichtung und die Aufextrusionsvorrichtung in räumlich voneinander getrennten Vorrichtungen oder integriert in einer Kombinationsvorrichtung angeordnet sind. Bei einer getrennten Anordnung lassen sich z.B. unterschiedliche Vorbehandlungen konstruktiv leicht realisieren. Bei einer kompakten Bausweise kann die Vorrichtung insgesamt platzsparend ausgebildet werden.

Die Kombinationsvorrichtung liegt mit Vorteil einlaufseitig in der Vorbehandlungszone auf dem ersten Profil auf und überträgt dadurch Wärme. Weiterhin ist es vorteilhaft, die Kontaktfläche der Kombinationsvorrichtung mit dem ersten Profil entgegengesetzt zur Extrusionsrichtung variabel zu verlängern. Durch längere Kontaktzeiten erhöht sich die Eindringtiefe der Wärme und somit die Schichtdicke mit erhöhter Temperatur. Das Formwerkzeug zur Profilierung wird mit Vorteil direkt vor den Düsenausgang der Kombinationsvorrichtung angeordnet. Der Vorteil dieses Verfahrens ist, dass ein Erhitzen der Oberfläche des ersten Profils durch die Düse und ohne eine zusätzliche Wärmequelle erfolgt. Somit kann die Abwärme der Kombinationsvorrichtung effizient genutzt werden. Hierbei ist zu beachten, dass der Abstand der Kombinationsvorrichtung zum ersten Profil in Richtung der Auslaufseite zunimmt, um die entstandenen Aufwerfungen der Profilierung nicht zu zerstören.

Eine vorteilhafte Ausgestaltung ergibt sich, wenn die Ausrichtung der Vorbehandlungsvorrichtung und/oder einer nachfolgenden Aufextrusionsvorrichtung und/oder einer Kombinationsvorrichtung entsprechend der Oberkante und/oder den Seitenkanten des ersten Profils erfolgt.

Auch ist es vorteilhaft, wenn mindestens eine Vorbehandlungsvorrichtung und/oder mindestens eine der nachfolgenden Aufextrusionsvorrichtung und/oder mindestens eine Kombinationsvorrichtung mit dem ersten Profil gekoppelt wird, die
a. beweglich gelagert und federnd an das erste Profil angelegt wird, und/oder
b. lagerichtig zum ersten Profil positioniert wird und/oder
c. die Zuordnung zum ersten Profil durch eine Anschlagfläche, welche mit einer Kante des ersten Profils zusammenwirkt, gewährleistet wird.

Für eine mechanische Bearbeitung ist es vorteilhaft, wenn in der Vorbehandlungsvorrichtung und/oder kurz vor dem Düsenausgang der Aufextrusionsvorrichtung und/oder in der Kombinationsvorrichtung mindestens ein justierbares und/oder beschichtetes Formwerkzeug, insbesondere messerartige Schneiden oder eine Walze mit scharfkantigen Profilierungen, angeordnet ist.

Das zur Profilierung verwendete Formwerkzeug kann unterhalb der Erweichungstemperatur des ersten Profils gekühlt werden. Dies kann z.B. durch Luftkühlung oder eine entsprechende Wasserkühlung erfolgen. Alternativ kann es aber auch zweckmäßig sein die Formwerkzeuge mit einer Beschichtung zu versehen und sie zu erhitzen. Durch eine geeignete Beschichtung wird ein Anhaften von Kunststoff auf dem Formwerkzeug vermieden. Die Wärmeübertragung kann mit Vorteil durch eine Heizfläche, Heißluftwärme oder eine Strahlungsquelle erfolgen.

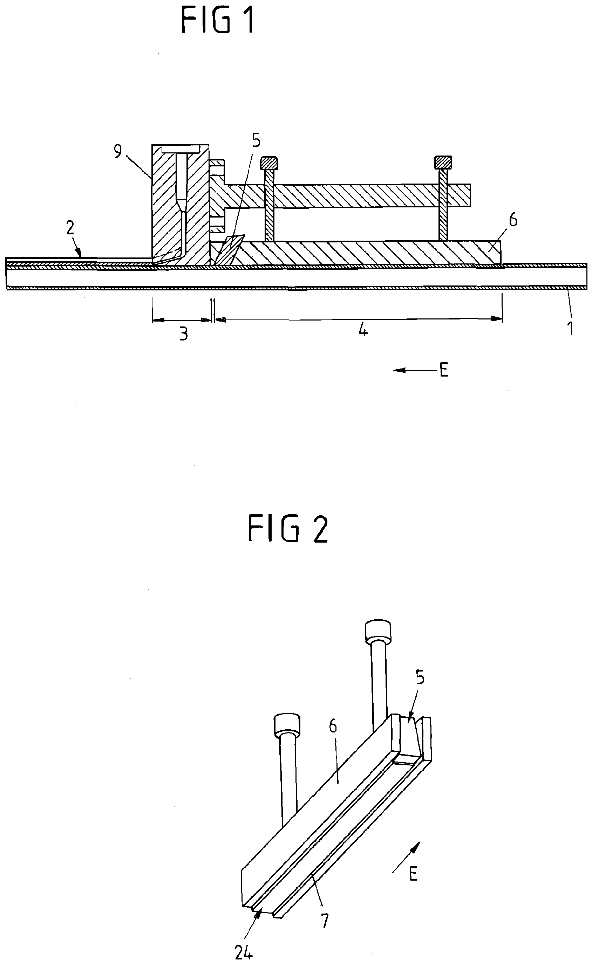

Auch ist in der Vorbehandlungsvorrichtung mindestens eine Heizvorrichtung, insbesondere eine Heizplatte, eine Heißluft-Vorwärmung oder eine Strahlungsquelle, angeordnet. Eine Temperatur der Formwerkzeuge zwischen 20 und 60 Kelvin oberhalb der Erweichungstemperatur des ersten Profils ist vorteilhaft. Dadurch schmilzt das erste Profil im Eingriffsbereich der Formwerkzeuge auf. Die Vorteile dieses Verfahrens sind, neben einer Profilierung mit deutlich geringerem Kraftaufwand, eine bessere Haftfestigkeit, welche durch Verschweißen der nun erweichten profilierten Oberfläche mit dem zweiten Profil erreicht wird.
Zur Stabilisierung des Gesamtprofils ist es vorteilhaft, wenn nach der zweiten Extrusionsvorrichtung weitere Kühl- und Kalibriervorrichtungen mit weiteren darauf folgenden Vorbehandlungsvorrichtungen und/oder weiteren Aufextrusionsvorrichtungen und/oder Kombinationsvorrichtungen folgen.
Ein Vorteil dieses Verfahrens und der Vorrichtung ist, dass die oben beschriebenen Ausführungsformen sowohl alleinstehend, als auch in jeglichen Kombinationsmöglichkeiten angewandt werden können. Weiterhin ist es möglich, die Verfahren und Vorrichtungen beliebig für mehr als zwei Profile zu kombinieren, um ein komplexeres Produkt zu erhalten. Dadurch wird gewährleistet, dass je nach den Materialeigenschaften der einzelnen Kunststoffkomponenten, ein möglichst wirtschaftlich effizientes Verfahren unter gleichzeitiger verbesserter Qualität des Produktes erzielt wird.
Die Erfindung wird nachfolgend unter Bezugnahme auf die Figuren der Zeichnung an mehreren Ausführungsbeispielen, insbesondere Fig. 1, näher erläutert. Es zeigen:
- Fig. 1: eine schematische Darstellung eines ersten Ausführungsbeispiels der Erfindung;
- Fig. 2: eine schematische Darstellung der Vorbehandlungsvorrichtung von Fig. 1;
- Fig. 3: eine schematische Darstellung einer Vorbehandlungsvorrichtung mit einer Heißluftvorwärmung;
- Fig. 4: eine schematische Darstellung eines Formwerkzeugs;
- Fig. 5: eine schematische Darstellung eines Beispiels;
- Fig. 6: eine schematische Darstellung eines weiteren Beispiels;
- Fig. 7: eine schematische Darstellung eines zweiten Ausführungsbeispiels der Erfindung;
- Fig. 8: ein vergrößerter Ausschnitt des Ausführungsbeispiels von Fig. 7;
- Fig. 9: eine schematische Darstellung eines Profils;
- Fig. 10: eine schematische Darstellung eines weiteren Beispiels mit einer Laservorrichtung zur Erwärmung;
- Fig. 11: eine Detaildarstellung des Beispiels gemäß Fig. 10;
- Fig. 12: eine Variante des Beispiels gemäß Fig. 10.

Das in Figur 1 dargestellte erste Profil 1 wurde in einer vorangehenden, aus Gründen der Einfachheit nicht näher gezeigten, Kalibriereinrichtung weitestgehend abgekühlt und ist formstabil. Somit wird eine negative Beeinträchtigung der Formgenauigkeit des ersten Profils 1 vermieden. Die Extrusionsrichtung E ist in Fig. 1 durch einen Pfeil dargestellt.

Das erste Profil 1 kann durch hier nicht dargestellte Führungsflächen und/oder -rollen lagekonstant geführt werden. Die Vorbehandlung des Profils 1 erfolgt in der Vorbehandlungszone 4. Die Vorbehandlungsvorrichtung 6 ist beweglich gelagert und wird federnd an das erste Profil 1 angelegt. Alternativ kann sie auch lagerichtig zum ersten Profil 1 positioniert sein. Die Zuordnung zum ersten Profil 1 wird durch eine Anschlagfläche 7, die hier nicht, aber in Figur 2 dargestellt ist, gewährleistet. Sie wirkt mit einer Kante des ersten Profils 1 zusammen.

Die Ausrichtung der Vorbehandlungsvorrichtung 6 und der nachfolgenden Aufextrusionsvorrichtung 9 auf die entsprechende Oberkante des ersten Profils 1 ist nicht zwingend und kann alternativ oder zusätzlich auf den Seitenkanten des ersten Profils 1 erfolgen.

Das erste Profil 1 wurde in einer Kalibriereinrichtung abgekühlt und ist formstabil, um eine negative Beeinträchtigung der Formgenauigkeit zu vermeiden. Das erste Profil 1 wird z.B. durch Führungsflächen und/oder -rollen lagekonstant geführt.

Das erste Profil 1 wird an der Oberfläche in der Vorbehandlungsvorrichtung 6, vorzugsweise in einem Temperaturbereich von 100°C bis 250°C, erhitzt. Dadurch wird ein Erweichen der Oberfläche des ersten Profils 1 erzielt. Die Wärmeübertragung erfolgt über eine (hier nicht, aber in Fig. 2 dargestellte) Heizvorrichtung 24 und wird über die Heizfläche auf das erste Profil 1 übertragen. Die Heizfläche entspricht in der Breite dem zweiten Profil 2.

Diese Übereinstimmung der Breite der Heizfläche 24 mit dem zweiten Profil 2 ist nicht zwingend und kann nach Bedarf vergrößert oder verkleinert werden. Auch die angegebene Wärmeübertragung kann beispielsweise durch Heißluftwärme oder eine Strahlungsquelle ersetzt werden.

Auslaufseitig ist an der Vorbehandlungvorrichtung 6 ein Formwerkzeug 5 angeordnet, welches auf der erhitzten Oberfläche des ersten Profils 1 eine Profilierung hinterlässt. Dies geschieht durch messerförmige Schneiden, welche Rillen und/oder Aufwerfungen erzeugen. Alternativ kann die Profilierung auch durch Schleifen und Aufrauen der Oberfläche geschehen oder durch eine auslaufseitig befestigte Walze mit einem gewünschten Profilierungsmuster. Weiterhin können andere Umformungs- oder Trennverfahren wie beispielsweise Rändeln, Prägen, Fräsen und Raspeln vorteilhaft sein.

Die Fläche des Formwerkzeugs 5 kann der Breite des zweiten Profils 2 entsprechen. Diese Zuordnung der Breite ist allerdings nicht zwingend und kann nach Bedarf vergrößert oder verkleinert werden. Das Formwerkzeug 5 ist justierbar gelagert um die Eindringtiefe und Art der Profilierung auf dem ersten Profil 1 zu steuern. Es kann, je nach Bedarf, mit einer Beschichtung versehen werden.

Alternativ kann es vorteilhaft sein, die Formwerkzeuge 5 unterhalb der Erweichungstemperatur des ersten Profils 1 zu kühlen. Dies kann z.B. durch Luftkühlung oder eine entsprechende Wasserkühlung erfolgen. Weiterhin kann es aber auch zweckmäßig sein, die Formwerkzeuge 5 mit einer Beschichtung zu versehen und sie zu erhitzen.

Das Auftragen eines zweiten Profils 2 erfolgt im Anschluss an die Vorbehandlungsvorrichtung 6 in der Aufextrusionszone 3. Die Aufextrusionsvorrichtung 9 wird in den Randbereichen der Kontaktfläche an das erste Profil 1 angelegt. Die Schmelze des zweiten Profils 2 wird durch den Massendruck in den entstanden Profilierungsformen verteilt. Hierbei ist zu beachten, dass der Abstand der Aufextrusionsvorrichtung 9 zum ersten Profil 1 im dargestellten Ausführungsbeispiel in Richtung der Auslaufseite hin zunimmt, um die entstandenen Aufwerfungen der Profilierung nicht zu zerstören.

Die Fig. 2 zeigt die in Fig. 1 beschriebene Vorbehandlungsvorrichtung 6 in einer perspektivischen Ansicht. Es sind deutlich das auslaufseitige Formwerkzeug 5, die Heizvorrichtung 24 und die seitliche Anschlagfläche 7 zu erkennen. Die Extrusionsrichtung E ist in Fig. 2 durch einen Pfeil dargestellt.

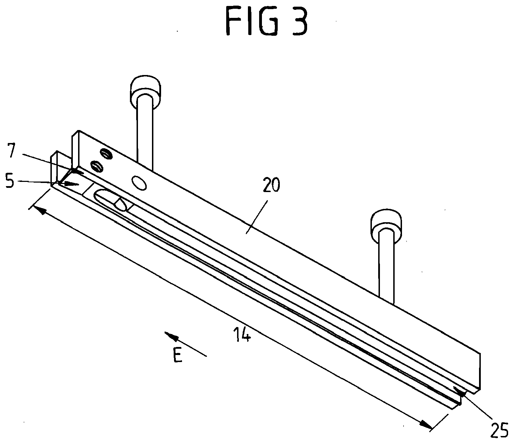

Die Fig. 3 zeigt eine alternative Vorbehandlungszone 14 mit einer Vorbehandlungsvorrichtung 20 in einer weiteren Ausführungsform, wobei unveränderte Elemente mit den gleichen Bezeichnungen wie in der Figur 1 versehen sind. Die Wärmeübertragung dieser Heizvorrichtung 25 erfolgt hier durch Heißluftvorwärmung. Die Extrusionsrichtung (E) ist in Fig. 3 durch einen Pfeil dargestellt.

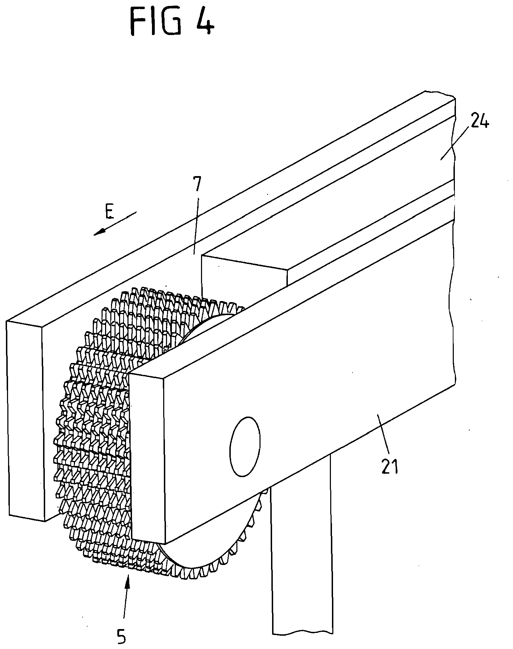

Die Fig. 4 zeigt eine alternative Vorbehandlungsvorrichtung 21, wobei unveränderte Elemente mit den gleichen Bezeichnungen wie in der Figur 1 versehen sind. Die die Anschlagfläche 7, welche eine Zuordnung zum Profil 1 ermöglicht, ist deutlich erkennbar. Die Profilierung durch ein Formwerkzeug 5 erfolgt hier über eine auslaufseitig befestigte Walze mit einem Profilierungsmuster. Die Heizvorrichtung 24 entspricht der in Fig. 1 dargestellten Variante.

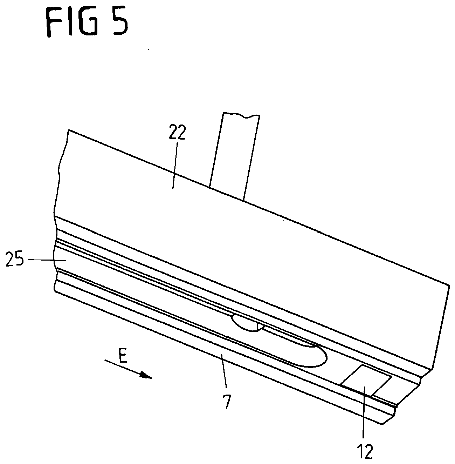

Die Fig. 5 zeigt eine schematische Darstellung eines Beispiels, wobei unveränderte Elemente mit den gleichen Bezeichnungen wie in der Figur 1 versehen sind. Bezüglich einer entsprechenden Erläuterung wird auf die obige Ausführung der Figur 1 verwiesen. Aus Gründen der Einfachheit wurde nur ein Ausschnitt der veränderten Vorbehandlungsvorrichtung 22 näher gezeigt.

Im Unterschied zum ersten Ausführungsbeispiel der Fig. 1 erfolgt keine Profilierung durch ein mechanisches Fertigungsverfahren. In der Vorbehandlungsvorrichtung 22 ist eine Zufuhrvorrichtung 12 zur Aufbringung eines Haftvermittlers auf die Kontaktoberfläche angeordnet, um die Haftfestigkeit der einzelnen Profile zu erhöhen. Die Auftragung erfolgt mittels eines filzartigen Verschlusses der Zuführöffnung. Diese Art der Auftragung ist aber nicht als zwingend anzusehen und kann je nach Bedarf beispielsweise mittels einer entsprechenden Düse mit Dosierpumpe oder einem Sprühverfahren erfolgen. Der Abstand der Zufuhröffnung zum hier nicht dargestellten Düsenausgang 8 des zweiten Profils 2 ist variabel einstellbar, um die Kontaktzeiten des Haftvermittlers mit dem ersten Profil 1 vor dem Auftragen des zweiten Profils 2 zu kontrollieren.

Eine weitere Verbesserung der Verbindungsfestigkeit kann durch Auftragen eines Haftvermittlers mit inerten Zusatzstoffen erreicht werden. Dem Haftvermittler werden, je nach Bedarf, in unterschiedlicher Körnigkeit Kunststoffkomponenten und / oder mineralische Zuschlagstoffe zugefügt.

Alternativ oder zusätzlich kann die Haftfestigkeit zwischen den beiden Profilen auch durch Aufbringen einer chemischen Substanz (oder auch eine Mischung von Substanzen) erhöht werden. Sie ist/sind so zu wählen, dass es zu einer chemischen Reaktion mit dem ersten und / oder zweiten Profil kommt. Durch solch eine Art des "Ätzens" wird die Oberflächenbeschaffenheit des ersten Profils verändert und das Profil erhält eine Mikroprofilierung. Das Verfahren erfolgt vorteilhafterweise analog zur Aufbringung des Haftvermittlers.

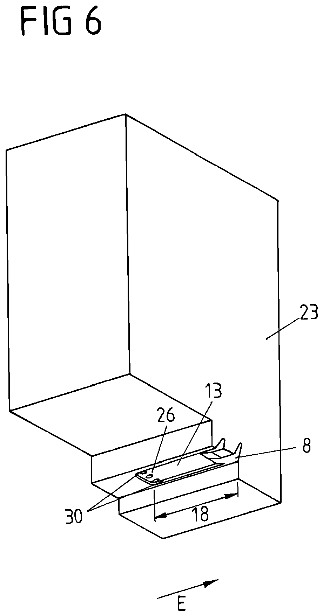

Grundsätzlich ist dieses Verfahren auch mit mechanischen Verfahren oder dem in Fig. 6 erläuterten Verfahren unter gezielter Veränderung des Umgebungsdrucks kombinierbar.

Die Fig. 6 zeigt eine schematische Darstellung eines weiteren Beispiels, wobei unveränderte Elemente mit den gleichen Bezeichnungen wie in der Figur 1 versehen sind. Bezüglich einer entsprechenden Erläuterung wird auf die obige Ausführung der Figur 1 verwiesen. Aus Gründen der Einfachheit wurde nur ein Ausschnitt der Aufextrusionsvorrichtung 23 näher gezeigt.

Im Unterschied zu den vorangehenden Beispielen erfolgt hier die Auftragung des zweiten Profils 2 in der Aufextrusionszone 18 unter einer Erniedrigung des Umgebungsdrucks. Der Umgebungsdruck wird in einer Hohlkammer 13, welche durch den unmittelbaren Kontakt des ersten Profils 1 mit der Aufextrusionsvorrichtung 23 einlaufseitig und seitlich abgedichtet 30 wird und sich auslaufseitig bis zum Düsenausgang 8 erstreckt, verringert. Die Druckerniedrigung erfolgt mittels einer entsprechenden (hier nicht dargestellten) Pumpvorrichtung über Bohrungen 26. Der Einsatz von Bohrungen 26 ist nicht zwingend und kann auch über Schlitze oder Vergleichbares erfolgen.

Alternativ oder zusätzlich kann der Umgebungsdruck in der Vorbehandlungszone verringet werden. Das Verfahren erfolgt vorteilhafterweise analog zur Druckerniedrigung des Umgebungsdrucks in der Aufextrusionszone.

Alternativ oder zusätzlich kann auch eine Erhöhung des Umgebungsdrucks nach der Aufextrusionszone vorteilhaft sein. Die Erhöhung erfolgt insbesondere mittels einer Druckkammer oder Druckluft.

Grundsätzlich ist dieses Verfahren auch mit mechanischen und chemischen Verfahren kombinierbar.

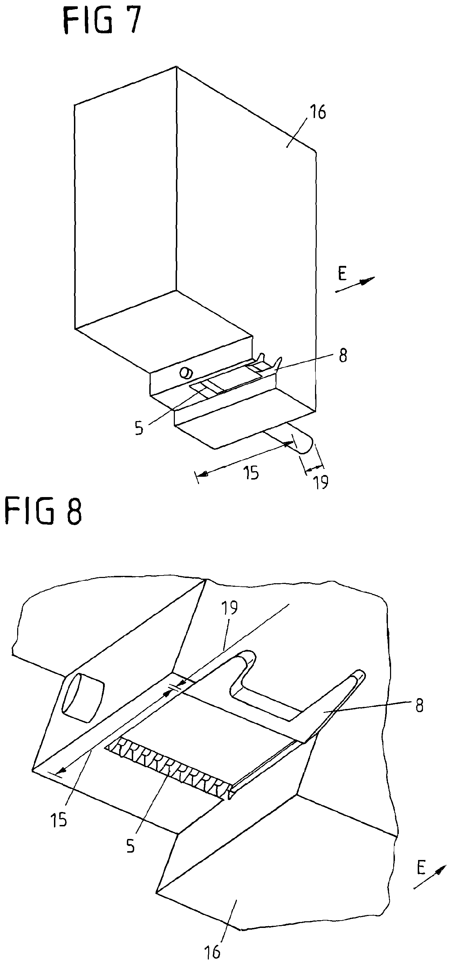

Die Fig. 7 zeigt eine schematische Darstellung eines zweiten Ausführungsbeispiels der Erfindung, wobei unveränderte Elemente mit den gleichen Bezeichnungen wie in der Fig. 1 versehen sind. Bezüglich einer entsprechenden Erläuterung wird auf die Beschreibung der Fig. 1 verwiesen.

Im Unterschied zur ersten Ausführungsform in Fig. 1 sind die Vorbehandlungsvorrichtung und die Aufextrusionsvorrichtung in einer Kombinationsvorrichtung 16 integriert angeordnet. In der Vorbehandlungszone 15 ist das Formwerkzeug 5 zur Profilierung der Oberfläche des ersten Profils 1 direkt vor den Düsenausgang 8 angeordnet. Die Kombinationsvorrichtung 16 liegt einlaufseitig auf dem ersten Profil 1 auf und überträgt dadurch Wärme auf das erste Profil 1. Die Länge der Kontaktfläche der Kombinationsvorrichtung 16 mit dem ersten Profil 1 ist nicht zwingend festgelegt und kann je nach Bedarf entgegengesetzt zur Extrusionsrichtung variabel verlängert werden. Die Abwärme der Kombinationsvorrichtung 16 wird auf den Kontaktflächenbereich des ersten Profils 1 übertragen. Hierbei ist ebenfalls zu beachten, dass der Abstand der Kombinationsvorrichtung 16 vom Profil in Richtung der Auslaufseite zunimmt, um die entstandenen Aufwerfungen der Profilierung vor der Aufextrusionszone 19 nicht zu zerstören.

Ein vergrößerter Ausschnitt dieses Ausführungsbeispiels ist zum besseren Verständnis in Fig. 8 dargestellt.

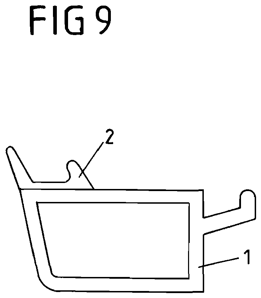

Das in Figur 9 schematisch dargestellte Profil zeigt das erste Profil 1 aus formstabilem Kunststoff mit einem zweiten aufextrudierten Profil 2.

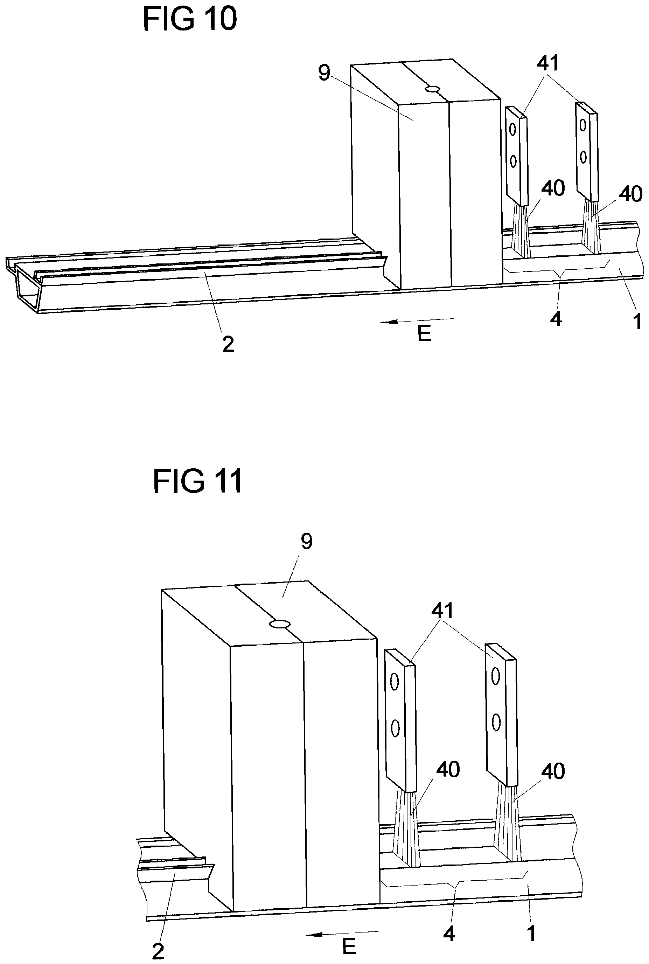

In den Fig. 10 bis 12 werden Beispiele dargestellt, bei denen eine Bearbeitung in der Vorbehandlungszone 4 durch eine Bestrahlung mit Laserstrahlung 40 zur Erwärmung des ersten Profils 1 erfolgt. Auch wenn in den Fig. 10 bis 12 nur jeweils allein Laservorrichtungen 41 dargestellt sind, kann die Laserbearbeitung der Vorbehandlungszone 4 auch in Kombination mit mindestens einer der anderen oben beschriebenen Vorrichtungen oder einem der anderen oben beschriebenen Verfahren betrieben werden.

Mittels einer Laservorrichtung 41 wird die Oberfläche des ersten Profils 1 erwärmt. Dabei kann insbesondere ein Diodenlaser vorteilhafterweise verwendet werden. Die in Fig. 10 und 11 dargestellte Laservorrichtung 41 weist zwei Laserdioden auf.

Die Laserstrahlung 40 ist dabei auf eine rechteckige Fläche exakt fokussierbar (z.B. 5 x 10 mm). Die Breite der erwärmten Fläche auf dem ersten Profil 1 ist exakt begrenzt und benötigt keine mechanisch wirkenden "begrenzer".

Auch ist die spezifische Energieabgabe bzw. -einbringung über die bestrahlte Fläche konstant. Auch lässt sich eine vergleichbar hohe Energiedichte (z.B. 4 W/mm²) damit erzielen, die im Übrigen auch gut regelbar ist, indem z.B. der Stromfluss der Laservorrichtung 41 beeinflusst wird.

Die Oberflächentemperatur kurz vor der Kontaktstelle kann berührungslos mittels Pyrometer sehr genau gemessen werden. Diese Temperatur kann für eine Steuerung oder Regelung der Laservorrichtung 41 verwendet werden.

Die Baugröße des Diodenlasers ist im Vergleich zu den bekannten Verfahren und im Vergleich zur Koextrusionsdüse, der Aufextrusionsvorrichtung 9 selbst sehr klein (z.B. 30 x 15 x 3 mm), so dass eine Anwendung unter sehr beengten Platzverhältnissen möglich ist.

In Fig. 10 ist dargestellt, wie das erste Profil 1 die Koextrusionsdüse als Aufextrusionsvorrichtung 9 durchläuft und mit dem zweiten Profil 2, einer Dichtlippe aus weichelastischem Kunststoff, versehen wird.

Einlaufseitig zur Koextrusionsdüse als Aufextrusionsvorrichtung 9 ist mindestens eine Laserdiode der Laservorrichtung 41 angeordnet. Aus dem Diodenlaser 41 werden energiereiche Laserstrahlen 40 emittiert, welche eine rechteckige Fläche auf dem ersten Profil 1 erwärmen. Wird nur ein Diodenlaser 41 eingesetzt, ist die Oberflächentemperatur an der effektiven Kontaktstelle mit etwa 150°C begrenzt, weil während der kurzen Einwirkzeit der Laservorrichtung 14 auf das mit der Extrusionsgeschwindigkeit (z.B. 2,0 bis 8 m/s) vorbeilaufende erste Profil 1 nur eine sehr geringe Eindringtiefe der Wärme in die Profilwandung bewirkt wird, und im Zeitraum bis zum Erreichen der Kontaktstelle Wärme von der Oberfläche weg in tiefer liegende Schichten abgeleitet wird. Höhere Temperaturen ohne örtlicher Überhitzung können erreicht werden, wenn man mehrere Laserstrahler, hintereinander anordnet, so dass die Wärme in tiefere Schichten vordringt und die Abkühlung der Oberfläche durch kleiner werdende Wärmegradienten vermindert wird. Die Wärme kann umso schonender in die Profiloberfläche eingebracht werden, je näher die Laserbestrahlung an der Kontaktstelle liegt, wobei dann auch die Eindringtiefe abnimmt.

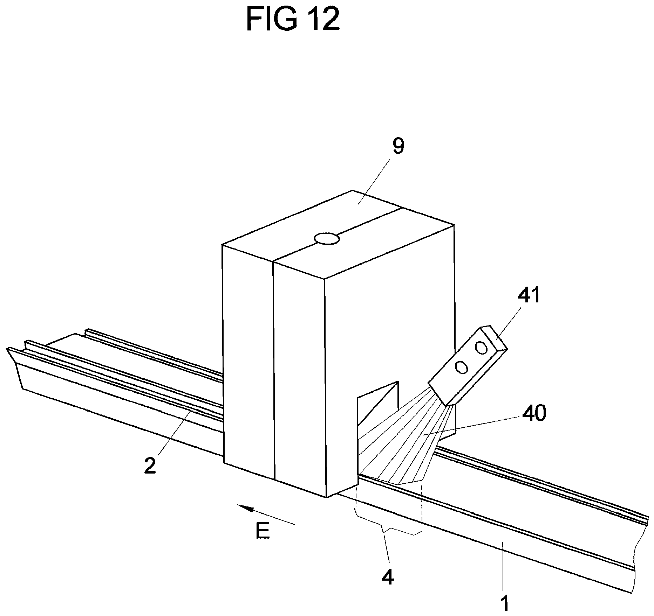

In Fig. 12 ist ein weiterees Beispiel dargestellt. Dabei weist die Aufextrusionsvorrichtung 9 (d.h. die Koextrusionsdüse) einlaufseitig eine Ausnehmung auf, in die die Laserstrahlung 40 unter einem stumpfen Winkel einstrahlen kann. Die bestrahlte Fläche auf dem ersten Profil 1 wird infolge Schrägstellung des Diodenlasers 4 und dessen vergrößerten Abstandes zum ersten Profil größer.

Dadurch ist die Einwirkzeit der Wärme auf das erste Profil 1 länger und gleichzeitig die spezifische Energieeinbringung geringer. Die gleiche Energieeinbringung erfolgt über einen längeren Zeitraum, im Vergleich zur senkrechten Laseranordnung in obigem Beispiel. Das bedeutet, dass die Wärme in etwas tiefere Schichten vordringt und die Höchsttemperatur der Oberfläche geringer ist, andererseits erfolgt deren Abkühlung etwas langsamer. Da die Erwärmung näher an der Kontaktstelle erfolgt und dadurch auch weniger Zeit für die Abkühlung zur Verfügung steht, ergeben sich vergleichsweise schonende Verhältnisse.

Die Laserbestrahlung zur Vorwärmung weist im Vergleich zu den bekannten Vorwärmverfahren folgende Vorteile auf:
- Guter energetischer Wirkungsgrad, weil eine Erwärmung an unerwünschten Stellen vermieden wird.
- Hohe Reproduzierbarkeit einmal aufgefundener, optimaler Einstellungen.
- Keine Markierungen auf dem Profil im Randbereich.
- Anwendbarkeit unter engen Platzverhältnissen infolge kleiner Dimensionen des Diodenlasers.

Die gezeigte Laserbestrahlung kann selbstverständlich mit den anderen Vorbehandlungsvorrichtungen kombiniert werden, z.B. mit einem mechanischen Profilieren der Kontaktfläche oder einer Beaufschlagung mit einem Haftvermittler oder Lösungsmittel.

Weitere, nicht in einer Figur explizit dargestellte Ausführungsbeispiele der Erfindung enthalten Vorrichtungen zum (a) Kühlen oder (b) Erhitzen der Formwerkzeuge 5 oder der Aufbringung einer chemischen Substanz.

Weiterhin ist zu beachten, dass die oben beschriebenen Verfahren sowohl alleinstehend, als auch in jeglichen Kombinationen angewandt werden können. So kann beispielsweise nach einer Profilierung der Kontaktoberfläche nach dem Ausführungsbeispiel von Fig. 1 die Auftragung des weiteren Profils im Unterdruck nach dem Ausführungsbeispiel von Fig. 6 erfolgen. Weiterhin könnte vor der Auftragung eines Haftvermittlers nach Fig. 5 eine Profilierung nach Fig. 1 erfolgen. Dies sind nur einige Beispiele der Kombinationsmöglichkeiten.

Das erste Profil kann aus der gleichen Kunststoffkomponente wie das zweite Profil bestehen. Alternative können beide auch aus unterschiedlichen Kunststoffkomponenten bestehen.

Außerdem können die einzelnen Verfahren je nach Bedarf mehrmals hintereinander in einem Arbeitsgang verwendet werden, um weitere Profile auf eine oder mehrere der Kanten des Profils zu bringen.

## Patentansprüche

1. Verfahren zur Herstellung eines Verbundprofils aus extrudierbaren Kunststoffen, bei welchem zunächst ein erstes Profil (1) extrudiert und anschließend in einer Kalibriereinrichtung bis zum Erreichen eines formstabilen Zustands abgekühlt wird, anschließend in einer Aufextrusionszone (3, 18, 19) mindestens ein zweites Profil (2) aufextrudiert wird, wobei eine Bearbeitung des ersten Profils (1) durch eine mechanische Vorbehandlung in einer Vorbehandlungszone (4, 14, 15) erfolgt, wobei diese in Extrusionsrichtung (E) vor der Aufextrusionszone (3, 18, 19) liegt, wobei das erste Profil (1) in der Vorbehandlungszone (4, 14, 15) durch mindestens ein Formwerkzeug (5) in einem mechanischen Trennverfahren und / oder durch einen auslaufseitig befestigten Kamm und / oder in einem Umformungsverfahren eine Profilierung erhält, wobei die Vorbehandlung unter Erwärmung ausgeführt wird, indem die Oberfläche des ersten Profils (1) erhitzt wird, **dadurch gekennzeichnet, dass** das Formwerkzeug (5) oberhalb der Erweichungstemperatur des Materials des ersten Profils (1) temperiert wird.

2. Verfahren nach Anspruch 1, **dadurch gekennzeichnet, dass** das erste Profil (1) in der Vorbehandlungszone (4, 14, 15) durch Fräsen, Raspeln, Kerben oder Schneiden eine Profilierung erhält.

3. Verfahren nach Anspruch 1, **dadurch gekennzeichnet, dass** das erste Profil (1) in der Vorbehandlungszone (4, 14, 15) durch Prägen, Rändeln oder Walzprägen eine Profilierung erhält.

4. Verfahren nach mindestens einem der vorhergehenden Ansprüche, **dadurch gekennzeichnet, dass** auf das erste Profil (1) in der Vorbehandlungszone (4, 14, 15) mindestens ein Haftvermittler mit oder ohne mindestens einem Zusatzstoff aufgebracht wird.

5. Verfahren nach mindestens einem der vorhergehenden Ansprüche, **dadurch gekennzeichnet, dass** die Aufextrusion des zweiten Profils (2) auf das erste Profil (1) unter Erniedrigung des Umgebungsdrucks vor und/oder innerhalb der Aufextrusionszone (3, 18, 19) erfolgt.

6. Verfahren nach mindestens einem der vorhergehenden Ansprüche, **dadurch gekennzeichnet, dass** nach der Aufextrusion des zweiten Profils (2) auf das erste Profil (1) eine Erhöhung des Umgebungsdrucks in dem Bereich nach der Aufextrusionszone (3, 18, 19) mittels insbesondere einer Druckkammer oder Druckluft erfolgt.

7. Vorrichtung zum Herstellen eines Verbundprofils aus extrudierbaren Kunststoffen nach einem Verfahren gemäß mindestens einem der Ansprüche 1 bis 6, mit mindestens einer Vorbehandlungsvorrichtung (6, 20, 21, 22) zur Bearbeitung des ersten Profils (1) durch eine mechanische Vorbehandlung in einer Vorbehandlungszone (4, 14, 15), wobei das erste Profil (1) in der Vorbehandlungszone (4, 14, 15) durch mindestens ein Formwerkzeug (5) in einem mechanischen Trennverfahren und / oder durch einen auslaufseitig befestigten Kamm und / oder in einem Umformungsverfahren eine Profilierung erhält, wobei die Vorbehandlung unter Erwärmung ausführbar ist, indem die Oberfläche des ersten Profils (1) erhitzbar ist, **dadurch gekennzeichnet, dass** in der Vorbehandlungszone mindestens eine Heizvorrichtung vorgesehen ist, so dass das Formwerkzeug (5) oberhalb der Erweichungstemperatur des Materials des ersten Profils (1) temperierbar ist.

8. Vorrichtung nach Anspruch 7, **dadurch gekennzeichnet, dass** die Vorbehandlungsvorrichtung (6, 20, 21,22) und die Aufextrusionsvorrichtung (9, 23) in räumlich voneinander getrennten Vorrichtungen oder integriert in einer Kombinationsvorrichtung (16) angeordnet sind.

9. Vorrichtung nach Anspruch 7 oder 8, **dadurch gekennzeichnet, dass** die Ausrichtung der Vorbehandlungsvorrichtung (6, 20, 21, 22) und/oder einer nachfolgenden Aufextrusionsvorrichtung (9, 23) und/oder einer Kombinationsvorrichtung (16) entsprechend der Oberkante und/oder den Seitenkanten des ersten Profils (1) erfolgt.

10. Vorrichtung nach mindestens einem der Ansprüche 7 bis 9, **dadurch gekennzeichnet, dass** mindestens eine Vorbehandlungsvorrichtung (6, 20, 21, 22) und/oder mindestens eine nachfolgende Aufextrusionsvorrichtung (9, 23) und/oder mindestens eine Kombinationsvorrichtung (16) mit dem ersten Profil (1) gekoppelt wird, die
a) beweglich gelagert und federnd an das erste Profil (1) angelegt wird, und/oder
b) lagerichtig zum ersten Profil (1) positioniert wird und/oder
c) die Zuordnung zum ersten Profil (1) durch eine Anschlagfläche (7), welche mit einer Kante des ersten Profils (1) zusammenwirkt, gewährleistet wird.

11. Vorrichtung nach mindestens einem der Ansprüche 7 bis 10, **dadurch gekennzeichnet, dass** in der Vorbehandlungsvorrichtung (6, 20, 21, 22) und/oder kurz vor dem Düsenausgang (8) der Aufextrusionsvorrichtung (9, 23) und/oder in der Kombinationsvorrichtung (16) mindestens ein justierbares und/oder beschichtetes Formwerkzeug (5), insbesondere messerartige Schneiden oder eine Walze mit scharfkantigen Profilierungen, angeordnet ist.

12. Vorrichtung nach mindestens einem der Ansprüche 7 bis 11, **dadurch gekennzeichnet, dass** mindestens ein Formwerkzeug (5) in dem Bereich, der nicht im Eingriff mit dem ersten Profil (1) angeordnet ist, durch eine
a) Kühlvorrichtung, insbesondere eine Luft- oder Wasserkühlung, oder eine
b) Heizvorrichtung, insbesondere eine Heizfläche, eine Heißluft-Vorwärmung oder durch eine Strahlungsquelle, unterhalb oder oberhalb der Erweichungstemperatur des ersten Profils (1) temperierbar ist.

## Claims

1. A method for manufacturing a composite profile from extrudable plastic materials, in which initially a first profile (1) is extruded and subsequently cooled in a calibration means until reaching a dimensionally stable state, subsequently at least one second profile (2) is extrusion coated in an extrusion coating zone (3, 18, 19), wherein a treatment of the first profile (1) is effected by a mechanical pretreatment in a pretreatment zone (4, 14, 15), wherein the same is located before the extrusion coating zone (3, 18, 19) in extrusion direction (E), wherein the first profile (1) receives a profiling in the pretreatment zone (4, 14, 15) by at least one forming tool (5) in a mechanical separation method and/or by a comb attached on the outlet side and/or in a shaping method, wherein the pretreatment is carried out under heating by heating the surface of the first profile (1),
**characterized in that**
the forming tool (5) is tempered above the softening temperature of the material of the first profile (1).

2. The method according to claim 1, **characterized in that** the first profile (1) receives a profiling in the pretreatment zone (4, 14, 15) by milling, rasping, notching or cutting.

3. The method according to claim 1, **characterized in that** the first profile (1) receives a profiling in the pretreatment zone (4, 14, 15) by embossing, knurling or rotary stamping.

4. The method according to at least one of the preceding claims, **characterized in that** in the pretreatment zone (4, 14, 15) at least one adhesion promoter with or without at least one additive is applied onto the first profile (1).

5. The method according to at least one of the preceding claims, **characterized in that** extrusion coating of the second profile (2) onto the first profile (1) is effected by decreasing the ambient pressure before and/or within the extrusion coating zone (3, 18, 19).

6. The method according to at least one of the preceding claims, **characterized in that** after extrusion coating the second profile (2) onto the first profile (1) an increase of the ambient pressure is effected in the region after the extrusion coating zone (3, 18, 19) in particular by means of a pressure chamber or compressed air.

7. An apparatus for manufacturing a composite profile from extrudable plastic materials by a method according to at least one of claims 1 to 6, comprising at least one pretreatment device (6, 20, 21, 22) for the treatment of the first profile (1) by a mechanical pretreatment in a pretreatment zone (4, 14, 15), wherein the first profile (1) receives a profiling in the pretreatment zone (4, 14, 15) by at least one forming tool (5) in a mechanical separation method and/or by a comb attached on the outlet side and/or in a shaping method, wherein the pretreatment is carryable out under heating by the surface of the first profile (1) being heatable,
**characterized in that**
at least one heating device is provided in the pretreatment zone (4, 14, 15) such that the forming tool (5) is temperable above the softening temperature of the material of the first profile (1).

8. The apparatus according to claim 7, **characterized in that** the pretreatment device (6, 20, 21, 22) and the extrusion coating device (9, 23) are arranged in spatially separate devices or integrated into a combination device (16).

9. The apparatus according to claim 7 or 8, **characterized in that** the alignment of the pretreatment device (6, 20, 21, 22) and/or a succeeding extrusion coating device (9, 23) and/or a combination device (16) is effected corresponding to the upper edge and/or the lateral edges of the first profile (1).

10. The apparatus according to at least one of claims 7 to 9, **characterized in that** at least one pretreatment device (6, 20, 21, 22) and/or at least one succeeding extrusion coating device (9, 23) and/or at least one combination device (16) is coupled with the first profile (1), which
a) is movably mounted and resiliently attached to the first profile (1), and/or
b) properly positioned relative to the first profile (1) and/or
c) the allocation to the first profile (1) is ensured by a stopping face (7) which cooperates with an edge of the first profile (1).

11. The apparatus according to at least one of claims 7 to 10, **characterized in that** in the pretreatment device (6, 20, 21, 22) and/or shortly before the nozzle outlet (8) of the extrusion coating device (9, 23) and/or in the combination device (16) at least one adjustable and/or coated forming tool (5) is arranged, in particular knife-like cutting edges or a roller with sharp-edged profilings.

12. The apparatus according to at least one of claims 7 to 11, **characterized in that** at least one forming tool (5) arranged in the region which is not in engagement with the first profile (1) is temperable by
a) a cooling device, in particular an air or water cooling, or
b) a heating device, in particular a heating surface, a hot-air preheater or a radiation source,
below or above the softening temperature of the first profile (1).

## Revendications

1. Procédé de fabrication d'un profilé composite en matières plastiques pouvant être extrudées, dans lequel on extrude d'abord un premier profilé (1) et on le refroidit ensuite dans un dispositif de calibrage jusqu'à atteindre un état de forme stable, on sur-extrude ensuite au moins un deuxième profilé (2) dans une zone de sur-extrusion (3, 18, 19), dans lequel on effectue un traitement du premier profilé (1) au moyen d'un prétraitement mécanique dans une zone de prétraitement (4, 14, 15), dans lequel celle-ci est située avant la zone de sur-extrusion (3, 18, 19) dans la direction d'extrusion (E), dans lequel le premier profilé (1) reçoit un profilage dans la zone de prétraitement (4, 14, 15) par au moins un outil de formage (5) dans un procédé de découpage mécanique et/ou par une lame fixée à la sortie et/ou dans un procédé de déformation, dans lequel le prétraitement est exécuté sous chauffage, du fait que la surface du premier profilé (1) est chauffée, **caractérisé en ce que** l'on régule la température de l'outil de formage (5) au-dessus de la température de ramollissement du matériau du premier profilé (1).

2. Procédé selon la revendication 1, **caractérisé en ce que** le premier profilé (1) reçoit un profilage dans la zone de prétraitement (4, 14, 15) par fraisage, râpage, entaillage ou coupe.

3. Procédé selon la revendication 1, **caractérisé en ce que** le premier profilé (1) reçoit un profilage dans la zone de prétraitement (4, 14, 15) par estampage, moletage ou gaufrage.

4. Procédé selon au moins une des revendications précédentes, **caractérisé en ce que** l'on applique sur le premier profilé (1) dans la zone de prétraitement (4, 14, 15), au moins un agent adhésif avec ou sans au moins une matière d'addition.

5. Procédé selon au moins une des revendications précédentes, **caractérisé en ce que** l'on effectue la sur-extrusion du deuxième profilé (2) sur le premier profilé (1) avec abaissement de la pression ambiante avant et/ou à l'intérieur de la zone de sur-extrusion (3, 18, 19).

6. Procédé selon au moins une des revendications précédentes, **caractérisé en ce qu'**après la sur-extrusion du deuxième profilé (2) sur le premier profilé (1), on opère une augmentation de la pression ambiante dans la région suivant la zone de sur-extrusion (3, 18, 19), au moyen notamment d'une chambre de pression ou d'air comprimé.

7. Dispositif de fabrication d'un profilé composite en matières plastiques pouvant être extrudées par un procédé selon au moins une des revendications 1 à 6, avec au moins un dispositif de prétraitement (6, 20, 21, 22) pour le traitement du premier profilé (1) par un prétraitement mécanique dans une zone de prétraitement (4, 14, 15), dans lequel le premier profilé (1) reçoit un profilage dans la zone de prétraitement (4, 14, 15) par au moins un outil de formage (5) dans un procédé de découpage mécanique et/ou par une lame fixée à la sortie et/ou dans un procédé de déformation, dans lequel le prétraitement peut être exécuté sous chauffage, du fait que la surface du premier profilé (1) peut être chauffée, **caractérisé en ce qu'**un dispositif de chauffage est prévu dans la zone de prétraitement da façon que la température de l'outil de formage (5) peut être régulée au-dessus de la température de ramollissement du matériau du premier profilé (1).

8. Dispositif selon la revendication 7, **caractérisé en ce que** le dispositif de prétraitement (6, 20, 21, 22) et le dispositif de sur-extrusion (9, 23) sont des dispositifs spatialement séparés l'un de l'autre ou sont intégrés dans un dispositif combiné (16).

9. Dispositif selon la revendication 7 ou 8, **caractérisé en ce que** l'orientation du dispositif de prétraitement (6, 20, 21, 22) et/ou d'un dispositif de sur-extrusion qui suit (9, 23) et/ou d'un dispositif combiné (16) est effectuée suivant le coté supérieur et/ou les côtés latéraux du premier profilé (1).

10. Dispositif selon au moins une des revendications 7 à 9, **caractérisé en ce qu'**au moins un dispositif de prétraitement (6, 20, 21, 22) et/ou au moins un dispositif de sur-extrusion qui suit (9, 23) et/ou au moins un dispositif combiné (16) est couplé au premier profilé (1), qui
a) est monté de façon mobile et est appliqué de façon élastique sur le premier profilé (1), et/ou
b) est positionné en position correcte par rapport au premier profilé (1), et/ou
c) on garantit l'association au premier profilé (1) par une face de butée (7), qui coopère avec un côté du premier profilé (1).

11. Dispositif selon au moins une des revendications 7 à 10, **caractérisé en ce qu'**au moins un outil de formage (5) ajustable et/ou revêtu, en particulier des lames en forme de couteau ou un rouleau avec des profilages tranchants, est disposé dans le dispositif de prétraitement (6, 20, 21, 22) et/ou peu avant la sortie de buse (8) du dispositif de sur-extrusion (9, 23) et/ou dans le dispositif combiné (16).

12. Dispositif selon au moins une des revendications 7 à 11, **caractérisé en ce que** la température d'au moins un outil de formage (5) peut être régulée en dessous ou au-dessus de la température de ramollissement du premier profilé (1), dans la région qui n'est pas disposée en interaction avec le premier profilé (1), au moyen de
a) un dispositif de refroidissement, en particulier un refroidissement à l'air ou à l'eau, ou
b) un dispositif de chauffage, en particulier une face chauffante, un préchauffage à l'air chaud ou par une source de rayonnement.
